# EUROPEAN PATENT APPLICATION

(11) **EP 2 685 618 A2**
(43) Date of publication of application: **15.01.2014**
(21) Application number: 12184620.8
(22) Date of filing: 17.09.2012
(51) Int. Cl.: H02M 1/42

(54) **Power supply, solid-state light-emitting element lighting device, and luminaire**

(30) Priority: 13.07.2012 JP 2012158116
(71) Applicant: Toshiba Lighting & Technology Corporation, Yokosuka-shi Kanagawa 237-8510 (JP)
(72) Inventor: Otake, Hirokazu, Kanagawa, 237-8510 (JP); Kitamura, Noriyuki, Kanagawa, 237-8510 (JP); Takahashi, Yuji, Kanagawa, 237-8510 (JP); Akahoshi, Hiroshi, Kanagawa, 237-8510 (JP)
(74) Representative: Willquist, Sofia Ellinor

(57) **Abstract**

According to one embodiment, a power supply device includes a full-wave rectifier, a power converting circuit, and a partial smoothing circuit. The power converting circuit converts an output of the full-wave rectifier into a direct-current voltage according to a switching action of a switching element. The partial smoothing circuit includes, in series, a capacitor and a first diode connected in polarity opposite to output polarity of the full-wave rectifier. The partial smoothing circuit is provided on an output side of the full-wave rectifier in parallel to the power converting circuit. In the partial smoothing circuit, the capacitor is charged according to the switching action of the switching element of the power converting circuit. The partial smoothing circuit supplies charged electric of the capacitor to the power converting circuit via the first diode in a trough portion of an output voltage of the full-wave rectifier.

## Description

### FIELD

Embodiments described herein relate generally to a power supply device including a power converting circuit that converts electric power from an output of a full-wave rectifier into a load according to a switching action of a switching element, a solid-state light-emitting element lighting device including the power supply device, and a luminaire including the solid-state light-emitting element lighting device.

### BACKGROUND

In the past, in a switching regulator or an inverter circuit generally used as a power converting circuit, in general, a smoothing circuit is used in order to supply electric power even near a zero-cross point of a commercial alternating-current power supply.

As a simplest configuration, a rectifying smoothing circuit of a capacitor input type is used. However, in the case of this circuit, a smoothing voltage can be charged to a peak voltage of a power supply voltage and an output voltage can be fixed. On the other hand, since a conduction angle of an input current narrows, a peak waveform current is generated to deteriorate an input power factor. Further, an input current harmonic rises.

In particular, in recent years, phase control dimming is performed in a luminaire. Therefore, in order to cope with the phase control dimming, it is desired to expand an input current conduction angle to secure a holding current of a thyristor (a triac), which is a switching element, in a dimmer.

Therefore, there is known a configuration for securing an input current conduction angle using various power factor improving circuits.

### BRIEF DESCRIPTION OF THE DRAWINGS

FIG. 1 is a circuit diagram of a solid-state light-emitting element lighting device including a power supply device according to a first embodiment;
FIG. 2 is a circuit diagram of a phase control dimmer of the solid-state light-emitting element lighting device;
FIG. 3 is a waveform chart of a voltage and an electric current of the solid-state light-emitting element lighting device;
FIG. 4 is a perspective view of a luminaire including the solid-state light-emitting element lighting device;
FIG. 5 is a circuit diagram of a solid-state light-emitting element lighting device including a power supply device according to a second embodiment;
FIG. 6 is a circuit diagram of a solid-state light-emitting element lighting device including a power supply device according to a third embodiment;
FIG. 7 is a circuit diagram of a solid-state light-emitting element lighting device including a power supply device according to a fourth embodiment;
FIG. 8 is a waveform chart of a voltage and an electric current of the solid-state light-emitting element lighting device;
FIG. 9 is a circuit diagram of a solid-state light-emitting element lighting device including a power supply device according to a fifth embodiment;
FIG. 10 is a waveform chart of a voltage and an electric current of the solid-state light-emitting element lighting device;
FIG. 11 is a circuit diagram of a solid-state light-emitting element lighting device including a power supply device according to a sixth embodiment;
FIG. 12 is a circuit diagram of a solid-state light-emitting element lighting device including a power supply device according to a seventh embodiment;
FIG. 13 is a circuit diagram of a solid-state light-emitting element lighting device including a power supply device according to an eighth embodiment;
FIG. 14 is a circuit diagram of a solid-state light-emitting element lighting device including a power supply device according to a ninth embodiment;
FIG. 15 is a circuit diagram of a phase control dimmer of a solid-state light-emitting element lighting device including a power supply device according to a tenth embodiment; and
FIG. 16 is a waveform chart of a voltage and an electric current of the solid-state light-emitting element lighting device.

### DETAILED DESCRIPTION

In general, according to one embodiment, a power supply device includes a rectifier, a power converting circuit, and a partial smoothing circuit. The rectifier rectifies an alternating-current voltage. The power converting circuit includes at least one switching element and converts an output of the rectifier into a direct-current voltage according to a switching action of the switching element. The partial smoothing circuit includes, in series, a capacitor and a diode connected in polarity opposite to output polarity of the rectifier. The partial smoothing circuit is provided on an output side of the rectifier in parallel to the power converting circuit. In the partial smoothing circuit, the capacitor is charged according to the switching action of the switching element of the power converting circuit. The partial smoothing circuit supplies charged electric charges of the capacitor to the power converting circuit via the diode in a trough portion of an output voltage of the rectifier.

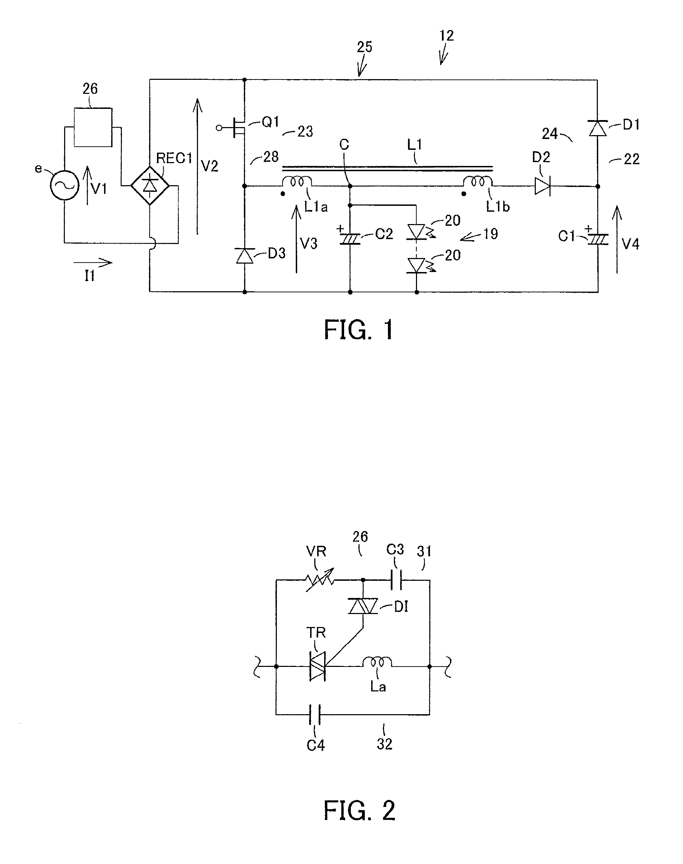

A configuration according to a first embodiment is explained below with reference to FIGS. 1 to 4.

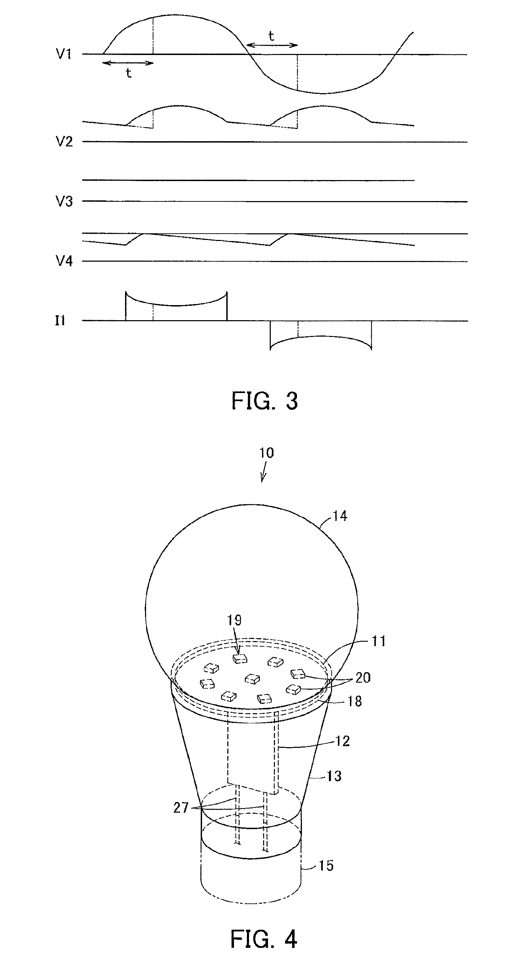

As shown in FIG. 4, a luminaire 10 is, for example, a bulb-type lamp. The luminaire 10 includes a light-emitting module 11, a lighting circuit 12, which is an LED lighting circuit, functioning as a solid-state light-emitting element lighting device that supplies electric power to the light-emitting module 11, a base body 13 functioning as a luminaire main body that includes the lighting circuit 12 and on one end side of which in a lamp axis direction (a direction in which a globe 14 and a cap 15 are connected) the light-emitting module 11 is arranged, the globe 14 attached to one end side of the base body 13 to cover the light-emitting module 11, and the cap 15 attached to the other end of the base body 13. The luminaire 10 has the length in the lamp axis direction and a maximum outer diameter in a direction orthogonal to the lamp axis direction equivalent to the dimensions of an incandescent lamp for general lighting. The luminaire 10 is formed in a shape approximate to the shape of the incandescent lamp as a whole.

The light-emitting module 11 includes a disk-like substrate 18 functioning as a module substrate and a light-emitting section 19 arranged on the surface on one end side of the substrate 18. Plural light-emitting diodes (LEDs) 20, which are solid-state light-emitting elements functioning as loads, are arranged on the light-emitting section 19. The light-emitting diodes 20 are, for example, electrically connected in series.

The lighting circuit 12 includes a power supply device (a switching regulator) 25. In the power supply device 25, as shown in FIGS. 1 to 4, a full-wave rectifier REC1, which is a rectifier that full-wave rectifies a (alternating-current) voltage V1 of a commercial alternating-current power supply e, which is an alternating-current power supply, is electrically connected to the commercial alternating-current power supply e via the cap 15. A series circuit 22 of a capacitor C1 and a first diode D1 and a power converting circuit 23, which includes one switching element Q1 and converts an output of the full-wave rectifier REC1 into a direct-current voltage (direct-current power) according to a switching action of the switching element Q1, are electrically connected to output ends of the full-wave rectifier REC1 in parallel. The series circuit 22 and the power converting circuit 23 are electrically connected by a second diode D2 to configure a partial smoothing circuit 24. Further, electric power is supplied to the lighting circuit 12 from the commercial alternating-current power supply e via a phase control dimmer 26. The lighting circuit 12 is electrically connected to the cap 15 via a pair of lead wires 27 and electrically connected to the light-emitting section 19 (the light-emitting diodes 20) of the light-emitting module 11 via a not-shown wire.

The capacitor C1 partially smoothes (fills a trough of) a voltage V2, which is supplied from the full-wave rectifier REC1 to the power converting circuit 23, only when the voltage is relatively low. For example, an electrolytic capacitor is used as the capacitor C1.

The first diode D1 discharges the charged electric charges of the capacitor C1 to supply electric power from the capacitor C1 to the power converting circuit 23 when an instantaneous value of a voltage V1 of the commercial alternating-current power supply e (a full-wave rectifying voltage of the full-wave rectifier REC1) is equal to or smaller than a predetermined value (smaller than the predetermined value). The first diode D1 is electrically connected to one end (a high voltage side) of the output ends of the full-wave rectifier REC1 in a direction in which the capacitor C1 is discharged, i.e., in polarity opposite to output polarity of the full-wave rectifier REC1.

The second diode D2 charges the capacitor C1 according to the switching action of the switching element Q1 of the power converting circuit 23. The second diode D2 is electrically connected in a direction in which the capacitor C1 is charged.

The power converting circuit 23 is a DC-DC converter, i.e., a falling-voltage chopper circuit including a series circuit 28 of the switching element Q1 and a third diode D3, an inductor L1 electrically connected between a connection point of the switching element Q1 and the third diode D3 and the second diode D2, and an output capacitor C2 connected to an intermediate tap C of the inductor L1. The output capacitor C2 is electrically connected to the light-emitting diodes 20 (the light-emitting section 19) in parallel. In the power converting circuit 23, the switching element Q1, the inductor L1, and the output capacitor C2 are electrically connected between the output ends of the full-wave rectifier REC1. The power converting circuit 23 is configured such that an increasing current, which linearly increases, flows from the full-wave rectifier REC1 to the inductor L1 when the switching element Q1 is turned on, electromagnetic energy is accumulated in the inductor L1, and, when the switching element Q1 is turned off, the electromagnetic energy accumulated in the inductor L1 is discharged into a closed circuit formed by the third diode D3 and a decreasing current, which linearly decreases, flows from the inductor L1 in the same direction as the increasing current. The power converting circuit 23 outputs a voltage smaller than a peak value of the voltage V1 of the commercial alternating-current power supply e to between both ends of the output capacitor C2.

In the inductor L1, the number of turns of a primary winding wire L1a is set to, for example, n1. The number of turns of a secondary winding wire L1b electrically connected to the primary winding wire L1a is set to n2. The primary winding wire L1a is electrically connected to the connection point of the switching element Q1 and the third diode D3. The secondary winding wire L1b is electrically connected to the second diode D2.

The phase control dimmer 26 is a dimmer of a so-called leading edge type that sets, according to dimming control, a delay time t from a zero-cross point of the commercial alternating-current power supply e until an output of electric power to the light-emitting diodes 20 is turned on. A triac TR, which is a thyristor functioning as a self-holding element, is electrically connected to the commercial alternating-current power supply e in series. A timer circuit 31 is electrically connected to the triac TR. Further, a filter circuit 32 is electrically connected to both ends of the triac TR (FIG. 2). In the following explanation, the phase control dimmer 26 is simply referred to as dimmer 26.

The timer circuit 31 includes a time constant circuit, which is a series circuit of a variable resistor VR electrically connected to the triac TR in parallel and having resistance variably set according to dimming control and a capacitor C3, and a DIAC DI functioning as a trigger element, one end of which is electrically connected to a connection point of the variable resistor VR and the capacitor C3, which is an output end of the time constant circuit, and the other end of which is electrically connected to a control terminal of the triac TR.

The filter circuit 32 includes a capacitor C4 and a coil La. Noise is prevented from leaking to the commercial alternating-current power supply e side.

When the voltage V1 is applied to the dimmer 26 from the commercial alternating-current power supply e, the capacitor C3 is charged and the voltage at an output end of the capacitor C3 reaches a break-over voltage of the DIAC DI. Therefore, a gate current flows into the control terminal of the triac TR through the DIAC DI and the triac TR is turned on, whereby the dimmer 26 supplies an electric current to the light-emitting diodes 20 side. The triac TR supplies an electric current while maintaining conduction until the electric current decreases to be equal to or smaller than a holding current peculiar to the triac TR. When a power supply voltage decreases to near the zero-cross point, the electric current flowing through the triac TR decreases and the triac TR is turned off. In the next half cycle in which the polarity of the commercial alternating-current power supply e is reversed, the capacitor C3 is charged to the opposite polarity and the DIAC DI is broken over in the same manner to ignite the triac TR. Thereafter, this operation is repeated. Therefore, when the variable resistor VR is operated via a not-shown dial set on a wall surface or the like to change the resistance of the variable resistor VR, since the time constant (the delay time t) changes, a conduction angle (a phase angle) of turn-on of the triac TR, i.e., a dimming degree changes. As a result, the dimmer 26 can change an output voltage thereof according to a dimming degree determined according to operation by a user.

The base body (a housing) 13 is formed of, for example, resin or metal in a covered cylindrical shape. The substrate 18 of the light-emitting module 11 is arranged on one end side of the base body 13. The pair of lead wires 27 are led out from the other end side of the base body 13.

The cap 15 can be connected to a socket of a general illumination bulb. The cap 15 includes a shell on which a screw thread is formed along the circumferential surface, an insulating section provided on the surface on the other end side of the shell, and an eyelet provided at the top of the insulating section. When the cap 15 is attached to the base body 13, one lead wire 27 of the pair of lead wires 27 is connected to the shell and the other lead wire 27 is connected to the eyelet.

Operations according to the first embodiment are explained.

In the luminaire 10, when the cap 15 is screwed into a not-shown socket and attached, the voltage of the commercial alternating-current power supply e is supplied, via the dimmer 26, from the socket to the lighting circuit 12 through the cap 15.

At this point, first, in the dimmer 26, the voltage at the output end of the capacitor C3 of the time constant circuit reaches the break-over voltage of the DIAC DI at every half cycle of the voltage V1 of the commercial alternating-current power supply e. Then, the gate current flows into the control terminal of the triac TR through the DIAC DI and the triac TR is turned on. Therefore, an output voltage changes. The output voltage is input to the full-wave rectifier REC1 of the lighting circuit 12 and full-wave rectified by the full-wave rectifier REC1. Then, the voltage V2 (FIG. 3) is generated at the output ends of the full-wave rectifier REC1 and input to the power converting circuit 23. In FIG. 3, for example, a solid line indicates a state without the dimmer 26 and an imaginary line indicates a predetermined dimming state.

In the power converting circuit 23, ON and OFF of the switching element Q1 is switched at a high frequency sufficiently higher than the frequency of the commercial alternating-current power supply e. Then, a load voltage V3, which is a direct-current voltage smoothed by the output capacitor C2, is supplied to the light-emitting diodes 20 and the light-emitting diodes 20 are turned on. Light from the light-emitting diodes 20 is transmitted through the globe 14 and irradiated to the outside.

At this point, in the partial smoothing circuit 24, when the switching element Q1 is turned on, the capacitor C1 is charged via the second diode D2. A charging voltage V4 (FIG. 3) of the capacitor C1 is determined according to the load voltage V3 and a turn ratio of the primary winding wire L1a and the secondary winding wire L1b of the inductor L1. The charging voltage V4 is represented as V4=V3·(n1+n2)/n1. In other words, the charging voltage V4 is set larger than the load voltage V3. If an instantaneous value of the voltage V2 is smaller than the charging voltage V4 of the capacitor C1, which is a predetermined value, electric power is supplied to the power converting circuit 23 at a voltage lower than the peak value of the voltage V1 on a power supply side from the capacitor C1 discharged via the first diode D1. If the instantaneous value of the voltage V2 is larger than the charging voltage V4, electric power is supplied to the power converting circuit 23 from the power supply side, i.e., an output side of the full-wave rectifier REC1. As a result, the voltage V2 output from the full-wave rectifier REC1 is partially smoothed and a current conduction angle is expanded. In other words, the current conduction angle is larger as a value of the charging voltage V4 is smaller.

As explained above, since the capacitor C1 of the partial smoothing circuit 24 is charged using the high-frequency switching action of the switching element Q1 of the power converting circuit 23, which is the falling-voltage chopper circuit, the capacitor C1 is not directly charged from the power supply voltage. Therefore, it is possible to suppress a rush current. Further, the voltage V2 output from the full-wave rectifier REC1 to the power converting circuit 23 is partially smoothed by supplying charged electric charges of the charged capacitor C1 to the power converting circuit 23 using the first diode D1 in a trough portion of the output voltage (the voltage V2) of the full-wave rectifier REC1. Therefore, for example, compared with a configuration including a separate power factor improving circuit including an active filter circuit, it is possible to obtain a high power factor with a simple configuration.

It is possible to perform dimmed lighting by detecting an ON phase, an output voltage value, and the like from a phase control output from the dimmer 26 and changing an output of the power converting circuit 23 according to a signal of the detection. Detecting means and output converting means of the power converting circuit 23 in this case are not shown in the figures. However, the detecting means and the output converting means can be configured as appropriate using known detecting means, switching control means of the switching element Q1, and the like.

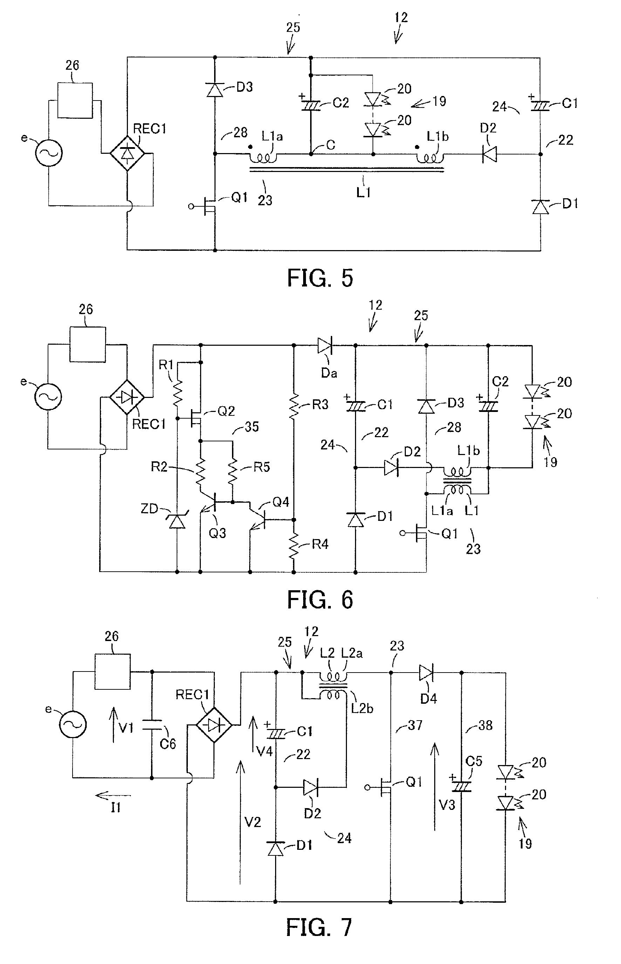

In the first embodiment, the same action and effects can be realized even in a configuration in which electric connections on the high-voltage side and the low-voltage side are interchanged as in a second embodiment shown in FIG. 5, i.e., the capacitor C1 is set on the high-voltage side and the first diode D1 is set on the low-voltage side in the series circuit 22 and the third diode D3 is set on the high-voltage side and the switching element Q1 is set on the low-voltage side in the series circuit 28.

A third embodiment is explained with reference to FIG. 6. Components and action same as those in the embodiments explained above are denoted by the same reference numerals and signs and explanation of the components and the action is omitted.

In a lighting circuit 12 of the luminaire 10 according to the third embodiment, a bleeder circuit 35, which is a constant current circuit, is connected between the full-wave rectifier REC1 and the power converting circuit 23 according to the second embodiment shown in FIG. 5.

The bleeder circuit 35 extracts, in a period in which the voltage V1 (the output voltage of the full-wave rectifier REC1) is smaller than a predetermined value, a bleeder current that can actuate the timer circuit 31 for turning on the triac TR of the dimmer 26 or causes the triac TR to self-hold an electric current. In the bleeder circuit 35, a series circuit (a constant voltage circuit) of a resistor R1 and a Zener diode ZD, a series circuit of a switching element Q2 such as an FET, a control terminal of which is electrically connected to a connection point of the resistor R1 and the Zener diode ZD, a resistor R2, and a switching element Q3 such as a bipolar transistor of an NPN type, and a series circuit of resistors R3 and R4 are electrically connected between the output ends of the full-wave rectifier REC1 in parallel. A switching element Q4 such as a bipolar transistor of the NPN type, a control terminal of which is electrically connected to a connection point of the resistors R3 and R4, is electrically connected to the other end of a resistor R5, one end of which is electrically connected to a connection point of the switching element Q2 and the resistor R2, and a control terminal of the switching element Q3. Further, the bleeder circuit 35 is electrically connected to the power converting circuit 23 via a diode Da for reverse current prevention.

If the dimmer 26 is operated and the lighting circuit 12 is set to an appropriate dimming degree, when the commercial alternating-current power supply e is turned on, during each half cycle of the voltage V1, an alternating-current voltage is applied to a closed circuit of the time constant circuit of the timer circuit 31 of the dimmer 26, the full-wave rectifier REC1, and the series circuit of the resistors R3 and R4 and a bleeder current flows to the series circuit of the resistors R3 and R4. Further, if the voltage V1 exceeds a Zener voltage of the Zener diode ZD, the switching element Q2 is turned on. Therefore, a voltage is applied to a series circuit of the switching element Q2, the resistor R2, and the switching element Q3 as well, the switching element Q3 is turned on, and the bleeder current flows. As a result, the timer circuit 31 of the dimmer 26 starts operation and the capacitor C3 is charged. At this point, since the bleeder current flowing to the series circuit of the resistors R3 and R4 is small, the switching element Q4 is not turned on.

Subsequently, the capacitor C3 is charged and the voltage of the capacitor C3 reaches the break-over voltage of the DIAC DI. Then, since the DIAC DI conducts, an electric current from the capacitor C3 flows into the control element of the triac TR and the triac TR is turned on. As a result, in the half cycle of the voltage V1, a voltage after a phase angle at which the triac TR is turned on is applied between input ends of the full-wave rectifier REC1 and full-wave rectified.

If this full-wave rectified voltage V2 is generated between the output ends, a voltage drop due to the dimmer 26 hardly occurs and a high voltage equal to or higher than a predetermined voltage is applied between the resistors R3 and R4. Therefore, since the switching element Q4 is turned on by the bleeder current flowing between the resistors R3 and R4, the switching element Q3 is turned off. Only an electric current, which is small compared with an electric current flowing via the resistor R2, flows to a series circuit of the switching element Q2, the resistor R5, and the switching element Q4. Therefore, it is possible to reduce a power loss in this period. Subsequently, if the voltage V1 drops in the half cycle of the voltage V1, the switching element Q4 is turned off again, the switching element Q3 is turned on, and the bleeder current flows via the resistor R2. Therefore, the ON state of the triac TR is maintained.

As explained above, the lighting circuit 12 includes the bleeder circuit 35 for obtaining the holding current of the triac TR of the dimmer 26. Therefore, even in the lighting circuit 12 including the light-emitting diodes 20 having a small lighting current, it is possible to cause the dimmer 26 to operate more stably.

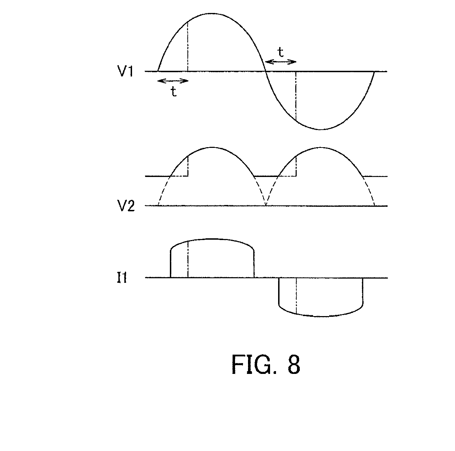

A fourth embodiment is explained with reference to FIGS. 7 and 8. Components and action same as those in the embodiments explained above are denoted by the same reference numerals and signs and explanation of the components and the action is omitted.

In the lighting circuit 12 of the luminaire 10 according to the fourth embodiment, the power converting circuit 23 is a DC-DC converter, i.e., a rising-voltage chopper circuit including a series circuit 37 of a choke coil L2 and the switching element Q1 connected between both ends of the series circuit 22, which is connected between the output ends of the full-wave rectifier REC1, and a series circuit 38 of a fourth diode D4 for reverse current prevention and a smoothing capacitor C5 connected between both ends of the switching element Q1. Further, a noise prevention capacitor C6 for noise filtering is electrically connected to an output side of the dimmer 26. The power converting circuit 23 is configured to turn on and off the switching element Q1 to generate, making use of self-induction of the choke coil L2, a predetermined load voltage V3 larger than the voltage V1 of the commercial alternating-current power supply e between both ends of the smoothing capacitor C5.

The choke coil L2 (a primary winding wire L2a) is electrically connected to one end (the high-voltage side) of the output ends of the full-wave rectifier REC1 in parallel to the series circuit 22 of the capacitor C1 and the first diode D1. A secondary winding wire L2b is magnetically coupled to the choke coil L2 (the primary winding wire L2a). One end of the secondary winding wire L2b is electrically connected to an input side of the choke coil L2 (the primary winding wire L2a), i.e., one end of the output ends of the full-wave rectifier REC1. The other end of the secondary winding wire L2b is electrically connected to the second diode D2. Further, the number of turns of the choke coil L2 (the primary winding wire L2a) is set to, for example, n3. The number of turns of the secondary winding wire L2b is set to, for example, n4.

When the commercial alternating-current power supply e is turned on, in the lighting circuit 12, the voltage V2 (FIG. 8) is generated at the output ends of the full-wave rectifier REC1 and input to the power converting circuit 23. In FIG. 8, for example, a solid line indicates a state without the dimmer 26 and an imaginary line indicates a predetermined dimming state.

In the power converting circuit 23, ON and OFF of the switching element Q1 is switched at a high frequency sufficiently higher than the frequency of the commercial alternating-current power supply e. Then, the load voltage V3, which is a direct-current voltage smoothed by the smoothing capacitor C5, is supplied to the light-emitting diodes 20 and the light-emitting diodes 20 are turned on. Light from the light-emitting diodes 20 is transmitted through the globe 14 and irradiated to the outside.

At this point, in the partial smoothing circuit 24, when the switching element Q1 is turned on, the capacitor C1 is charged via the second diode D2. A charging voltage V4 of the capacitor C1 is determined according to the load voltage V3 and a turn ratio of the choke coil L2 (the primary winding wire L2a) and the secondary winding wire L2b. The charging voltage V4 is represented as V4=V3-n4/n3. If an instantaneous value of the voltage V2 is smaller than the charging voltage V4 of the capacitor C1, which is a predetermined value, i.e., in a trough portion of the voltage V2, electric power is supplied to the power converting circuit 23 at a voltage higher than the voltage V1 on the power supply side from the capacitor C1 discharged via the first diode D1. If the instantaneous value of the voltage V2 is larger than the charging voltage V4, electric power is supplied to the power converting circuit 23 from the power supply side, i.e., the output side of the full-wave rectifier REC1. As a result, the voltage V2 output from the full-wave rectifier REC1 is partially smoothed and a current conduction angle is expanded.

As explained above, since the capacitor C1 of the partial smoothing circuit 24 is charged using the high-frequency switching action of the switching element Q1 of the power converting circuit 23, which is the rising-voltage chopper circuit, the capacitor C1 is not directly charged from the power supply voltage. Therefore, it is possible to suppress a rush current. Further, the voltage V2 output from the full-wave rectifier REC1 to the power converting circuit 23 is partially smoothed by supplying charged electric charges of the charged capacitor C1 to the power converting circuit 23 using the first diode D1 in a trough portion of the output voltage (the voltage V2) of the full-wave rectifier REC1. Therefore, for example, compared with a configuration including a separate power factor improving circuit including an active filter circuit, it is possible to obtain a high power factor with a simple configuration.

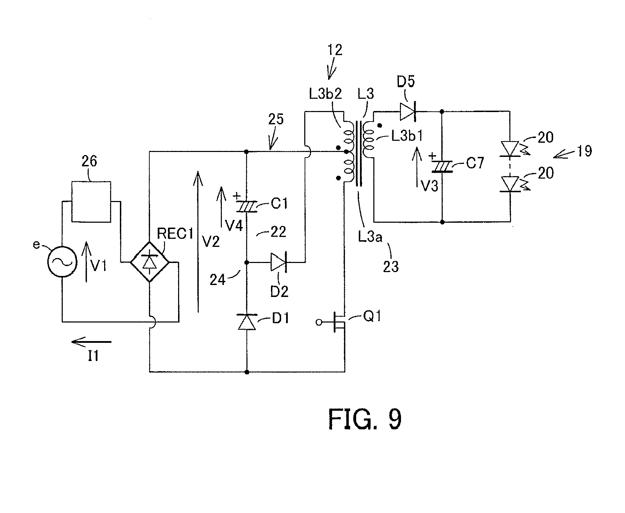

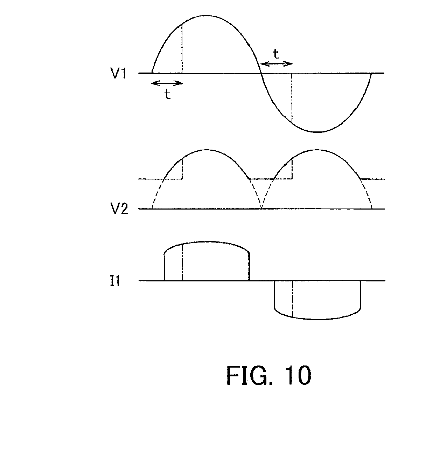

A fifth embodiment is explained with reference to FIGS. 9 and 10. Components and action same as those in the embodiments explained above are denoted by the same reference numerals and signs and explanation of the components and the action is omitted.

In the lighting circuit 12 of the luminaire 10 according to the fifth embodiment, the power converting circuit 23 is a DC-DC converter, i.e., a flyback converter including a choke coil L3, the switching element Q1 electrically connected in series to one end of a primary winding wire L3a, which is a primary side of the choke coil L3, and a fifth diode D5 for rectification (reverse current prevention) and an output capacitor C7 electrically connected to a secondary side of the choke coil L3, i.e., a (first) secondary winding wire L3b1 magnetically coupled to and electrically insulated from the primary winding wire L3a. The power converting circuit 23 is configured to turn on and off the switching element Q1 to generate, making use of self-induction of the choke coil L3, the predetermined load voltage V3 larger than the voltage V1 of the commercial alternating-current power supply e between both ends of the output capacitor C7 connected between both ends of the secondary winding wire L3b1.

A (second) secondary winding wire L3b2, which is a secondary side, electrically connected to the primary winding wire L3a of the choke coil L3 is electrically connected to the second diode D2. Further, in the choke coil L3, the number of turns of the primary winding wire L3a is set to, for example, n5, the number of turns of the secondary winding wire L3b1 is set to, for example, n6, and the number of turns of the secondary winding wire L3b2 is set to, for example, n7.

When the commercial alternating-current power supply e is turned on, in the lighting circuit 12, the voltage V2 (FIG. 10) is generated at the output ends of the full-wave rectifier REC1 and input to the power converting circuit 23. In FIG. 10, for example, a solid line indicates a state without the dimmer 26 and an imaginary line indicates a predetermined dimming state.

In the power converting circuit 23, ON and OFF of the switching element Q1 is switched at a high frequency sufficiently higher than the frequency of the commercial alternating-current power supply e. Then, the load voltage V3, which is a direct-current voltage smoothed by the output capacitor C7, is supplied to the light-emitting diodes 20 and the light-emitting diodes 20 are turned on. Light from the light-emitting diodes 20 is transmitted through the globe 14 and irradiated to the outside.

At this point, in the partial smoothing circuit 24, when the switching element Q1 is turned on, the capacitor C1 is charged via the second diode D2. The charging voltage V4 of the capacitor C1 is determined according to the load voltage V3 and a turn ratio of the primary winding wire L3a and the secondary winding wire L3b2 of the choke coil L3. The charging voltage V4 is represented as V4=V3·n7/n5. If an instantaneous value of the voltage V2 is smaller than the charging voltage V4 of the capacitor C1, which is a predetermined value, i.e., in the trough portion of the voltage V2, electric power is supplied to the power converting circuit 23 at a voltage higher than the voltage V1 on the power supply side from the capacitor C1 discharged via the first diode D1. If the instantaneous value of the voltage V2 is larger than the charging voltage V4, electric power is supplied to the power converting circuit 23 from the power supply side, i.e., the output side of the full-wave rectifier REC1. As a result, the voltage V2 output from the full-wave rectifier REC1 is partially smoothed and a current conduction angle is expanded.

As explained above, since the capacitor C1 of the partial smoothing circuit 24 is charged using the high-frequency switching action of the switching element Q1 of the power converting circuit 23, which is the flyback converter, the capacitor C1 is not directly charged from the power supply voltage. Therefore, it is possible to suppress a rush current. Further, the voltage V2 output from the full-wave rectifier REC1 to the power converting circuit 23 is partially smoothed by supplying charged electric charges of the charged capacitor C1 to the power converting circuit 23 using the first diode D1 in the trough portion of the output voltage (the voltage V2) of the full-wave rectifier REC1. Therefore, for example, compared with a configuration including a separate power factor improving circuit including an active filter circuit, it is possible to obtain a high power factor with a simple configuration.

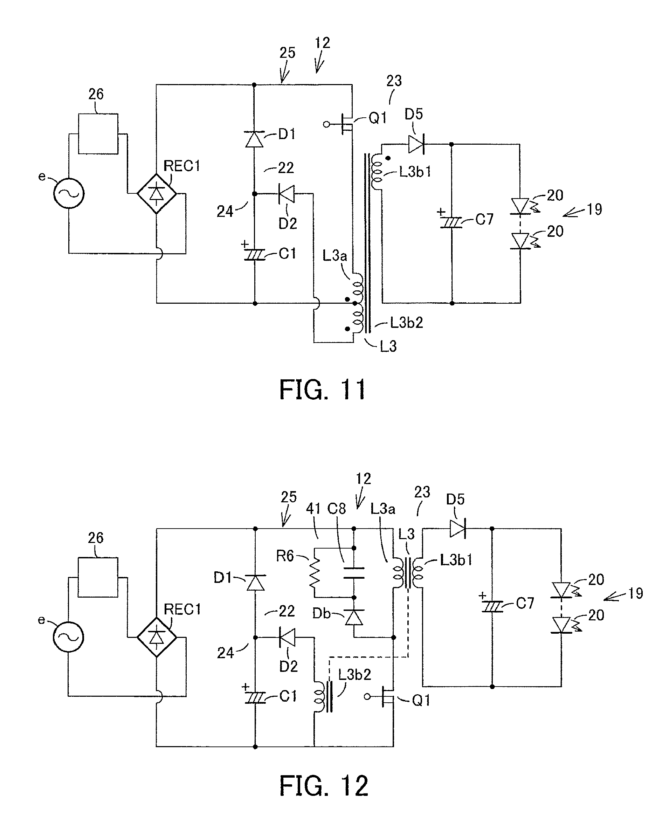

In the fifth embodiment, the same action and effects can be realized even in a configuration in which electric connections on the high-voltage side and the low-voltage side are interchanged as in a sixth embodiment shown in FIG. 11, i.e., the first diode D1 is set on the high-voltage side, the capacitor C1 is set on the low-voltage side, the switching element Q1 is set on the high-voltage side, and the choke coil L3 is set on the low-voltage side in the series circuit 22.

In the fifth embodiment, the same action and effects can be realized even if, as in a seventh embodiment shown in FIG. 12, a snubber circuit 41 including a diode Db, a resistor R6, and a capacitor C8 and configured to regenerate an electric current flowing to the primary winding wire L3a of the choke coil L3 is electrically connected to the primary winding wire L3a of the choke coil L3 and the second diode D2 is electrically connected to the secondary winding wire L3b2 magnetically coupled to and electrically insulated from the primary winding wire L3a of the choke coil L3.

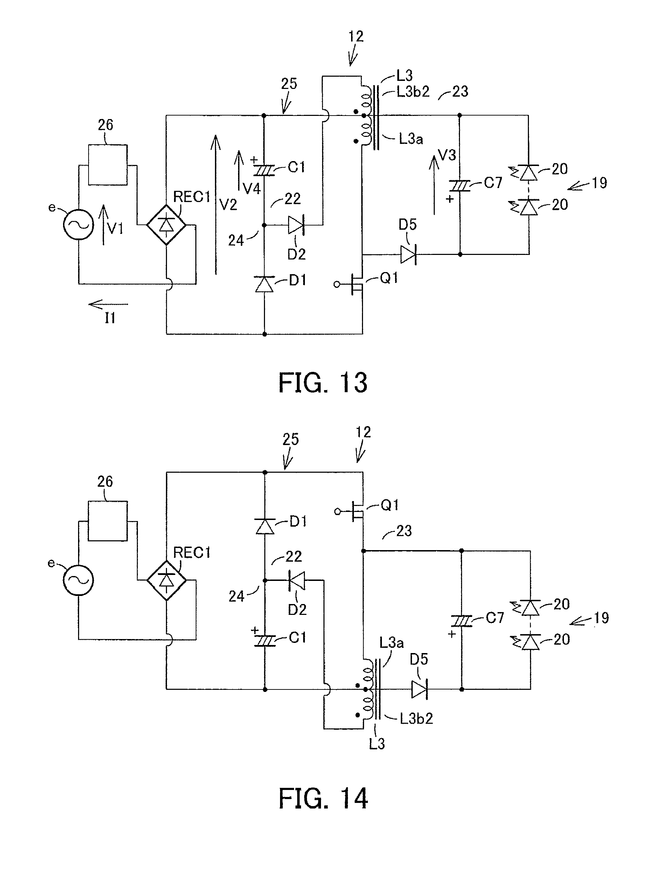

An eighth embodiment is explained with reference to FIG. 13. Components and action same as those in the embodiments explained above are denoted by the same reference numerals and signs and explanation of the components and the action is omitted.

In the lighting circuit 12 of the luminaire 10 according to the eighth embodiment, in the fifth embodiment, the fifth diode D5 is connected to a connection point of the choke coil L3 and the switching element Q1 and the output capacitor C7 is connected between an output side of the fifth diode D5 and the primary winding wire L3a of the choke coil L3.

When the commercial alternating-current power supply e is turned on, in the lighting circuit 12, the voltage V2 (FIG. 8) is generated at the output ends of the full-wave rectifier REC1 and input to the power converting circuit 23.

In the power converting circuit 23, ON and OFF of the switching element Q1 is switched at a high frequency sufficiently higher than the frequency of the commercial alternating-current power supply e. Then, the load voltage V3, which is a direct-current voltage smoothed by the output capacitor C7, is supplied to the light-emitting diodes 20 and the light-emitting diodes 20 are turned on. Light from the light-emitting diodes 20 is transmitted through the globe 14 and irradiated to the outside.

At this point, in the partial smoothing circuit 24, when the switching element Q1 is turned on, the capacitor C1 is charged via the second diode D2. The charging voltage V4 of the capacitor C1 is determined according to the load voltage V3 and a turn ratio of the primary winding wire L3a and the secondary winding wire L3b2 of the choke coil L3. The charging voltage V4 is represented as V4=V3·n7/n5. If an instantaneous value of the voltage V2 is smaller than the charging voltage V4 of the capacitor C1, which is a predetermined value, i.e., in the trough portion of the voltage V2, electric power is supplied to the power converting circuit 23 at a voltage higher than the voltage V1 on the power supply side from the capacitor C1 discharged via the first diode D1. If the instantaneous value of the voltage V2 is larger than the charging voltage V4, electric power is supplied to the power converting circuit 23 from the power supply side, i.e., the output side of the full-wave rectifier REC1. As a result, the voltage V2 output from the full-wave rectifier REC1 is partially smoothed and a current conduction angle is expanded.

As explained above, since the capacitor C1 of the partial smoothing circuit 24 is charged using the high-frequency switching action of the switching element Q1 of the power converting circuit 23, which is the flyback converter, the capacitor C1 is not directly charged from the power supply voltage. Therefore, it is possible to suppress a rush current. Further, the voltage V2 output from the full-wave rectifier REC1 to the power converting circuit 23 is partially smoothed by supplying charged electric charges of the charged capacitor C1 to the power converting circuit 23 using the first diode D1 in the trough portion of the output voltage (the voltage V2) of the full-wave rectifier REC1. Therefore, for example, compared with a configuration including a separate power factor improving circuit including an active filter circuit, it is possible to obtain a high power factor with a simple configuration.

In the eighth embodiment, the same action and effects can be realized even in a configuration in which electric connections on the high-voltage side and the low-voltage side are interchanged as in a ninth embodiment shown in FIG. 14, i.e., the first diode D1 is set on the high-voltage side, the capacitor C1 is set on the low-voltage side, the switching element Q1 is set on the high-voltage side, and the choke coil L3 is set on the low-voltage side in the series circuit 22.

In at least one of the first, second, and fourth to ninth embodiments, a circuit for feeding the holding current of the triac TR of the dimmer 26 is not provided. Therefore, it is possible to suppress deterioration in reliability due to a decrease in circuit efficiency by the circuit, an increase in a temperature rise, and the like and contribute to energy saving.

In at least one of the embodiments explained above, the dimmer 26 of the leading edge type is used that sets, according to dimming control, the delay time t from the zero-cross point of the commercial alternating-current power supply e until an output of electric power to the light-emitting diodes 20 is turned on. If the dimmer 26 of the leading edge type is applied to a power supply device including a general smoothing circuit of a capacitor input type, when the triac TR of the dimmer 26 is turned on, a peak of an input current flowing into a circuit sometimes reaches a value several ten times as large as an effective value of a steady-state input current. Therefore, it is anticipated that a wiring capacity increases and stress is applied to components in the dimmer 26. Further, noise occurs because a peak current flows at a power supply period. Therefore, the capacitor C1 is charged by the switching action of the switching element Q1 of the power converting circuit 23 to realize partial smoothing. Consequently, even if the dimmer 26 of the leading edge type is used, it is possible to cause the dimmer 26 to stably operate. It is possible to prevent an increase in the number of components and an increase in costs by separately providing, for example, a component for suppressing a rush current. Further, it is possible to suppress a temperature rise and noise, reduce size, and improve reliability.

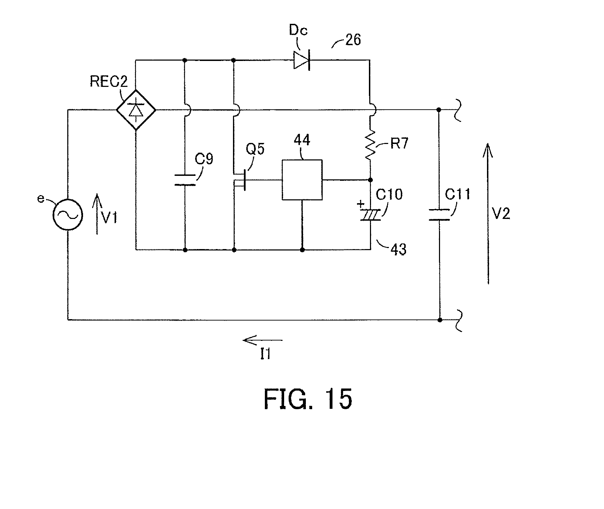

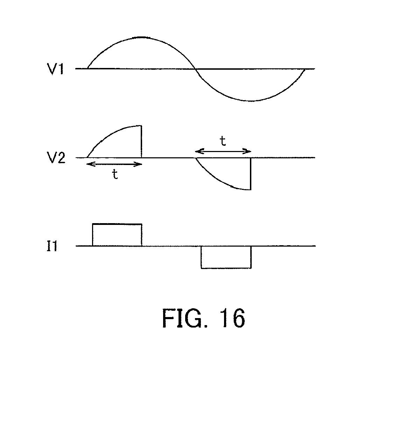

In at least any one of the first, second, and fourth to ninth embodiments, the dimmer 26 may be a dimmer of a trailing edge type that sets, according to dimming control, the delay time t from the zero-cross point of the commercial alternating-current power supply e until an output of electric power to the light-emitting diodes 20 is turned off, as in a tenth embodiment shown in Figs. 15 and 16.

Specifically, the dimmer 26 includes a full-wave rectifier REC2, input ends of which are connected between the commercial alternating-current power supply e and one end of the input ends of the full-wave rectifier REC1, a capacitor C9 for smoothing connected between output ends of the full-wave rectifier REC2, a switching element Q5 connected between both ends of the capacitor C9 for smoothing, a diode Dc connected between both ends of the switching element Q5, an auxiliary power supply circuit 43, which is a series circuit of a resistor R7 and a capacitor C10, and a control circuit 44 that receives power supply by the capacitor C10 and controls switching of the switching element Q5. A noise prevention capacitor C11 for noise filtering is connected between the dimmer 26 and the full-wave rectifier REC1.

When the luminaire 10 operates, in the lighting circuit 12, first, in the dimmer 26, the control circuit 44 operates with power supply from the capacitor C10 charged by an output voltage of the full-wave rectifier REC2 via the diode Dc and the resistor R7 in an OFF period of the switching element Q5. The control circuit 44 turns on the switching element Q5 with the delay time t corresponding to a dimming degree determined according to operation by the user, whereby the output voltage changes. The output voltage is input to the full-wave rectifier REC1 and full-wave rectified by the full-wave rectifier REC1. Then, the voltage V2 (FIG. 16) is generated at the output ends of the full-wave rectifier REC1 and input to the power converting circuit 23.

In the power converting circuit 23, ON and OFF of the switching element Q1 is switched at a high frequency sufficiently higher than the frequency of the commercial alternating-current power supply e. Then, the load voltage V3 is supplied to the light-emitting diodes 20 and the light-emitting diodes 20 are turned on. Light from the light-emitting diodes 20 is transmitted through the globe 14 and irradiated to the outside.

At this point, in the partial smoothing circuit 24, when the switching element Q1 is turned on, the capacitor C1 is charged via the second diode D2. If an instantaneous value of the voltage V2 is smaller than the charging voltage V4 of the capacitor C1, which is a predetermined value, i.e., in the trough portion of the voltage V2, electric power is supplied to the power converting circuit 23 at a voltage lower than the voltage V1 on a power supply side from the capacitor C1 discharged via the first diode D1. If the instantaneous value of the voltage V2 is larger than the charging voltage V4, electric power is supplied to the power converting circuit 23 from the power supply side, i.e., the output side of the full-wave rectifier REC1. As a result, the voltage V2 output from the full-wave rectifier REC1 is partially smoothed and a current conduction angle is expanded.

As explained above, the dimmer 26 of the trailing edge type is used that sets, according to dimming control, the delay time t from the zero-cross point of the commercial alternating-current power supply e until an output of electric power to the light-emitting diodes 20 is turned off. If the dimmer 26 of the trailing edge type is applied to a power supply device including a general smoothing circuit of the capacitor input type, in a period in which an input current is 0 even if the dimmer 26 is interrupted, since there is no path for discharging charges accumulated in the noise prevention capacitor C11, the charges remain. In a period in which the switching element Q5 is interrupted, a leak current flows out because the capacitor C10 in the dimmer 26 is charged. Therefore, an output voltage of the dimmer 26 does not drop. If a bleeder circuit or the like is provided in order to lead in the charges of the noise prevention capacitor C11 and the leak current, the bleeder circuit is configured to operate at a voltage equal to or lower than a predetermined voltage in order to prevent a decrease in circuit efficiency of the power supply device 25. Therefore, if the dimmer 26 is interrupted in a phase in which a power supply voltage is relatively high, a discharge operation by the bleeder circuit is not easy. If the bleeder circuit is configured to always feed an electric current, a decrease in circuit efficiency is inevitable. Therefore, the capacitor C1 is charged according to the switching action of the switching element Q1 of the power converting circuit 23 to realize partial smoothing. Consequently, even if the dimmer 26 of the trailing edge type is used, since a current conduction angle is large, it is possible to easily lead in the charges of the noise prevention capacitor C11 and the leak current. Therefore, it is possible to stabilize an output voltage of the dimmer 26. Further, it is unnecessary to provide the bleeder circuit of the like. It is possible to further improve the circuit efficiency.

According to at least one of the embodiments explained above, the partial smoothing circuit 24 is provided that supplies the charged electric charges of the capacitor C1 charged according to the switching action of the switching element Q1 of the power converting circuit 23 to the power converting circuit 23 via the first diode D1 in the trough portion of the output voltage (the voltage V1) of the full-wave rectifier REC1. Therefore, since the capacitor C1 is not directly charged from the power supply voltage, it is possible to suppress a rush current. Further, the voltage V2 output from the full-wave rectifier REC1 to the power converting circuit 23 is partially smoothed. Therefore, it is possible to improve a power factor only with a converter at one stage and obtain a high power factor with a simple configuration.

Specifically, in the power supply device 25, on the output side of the full-wave rectifier REC1, the series circuit 22 of the capacitor C1 and the first diode D1 and the power converting circuit 23 are connected in parallel. The first diode D1 is connected in a direction in which the capacitor C1 is discharged and in polarity opposite to the polarity of the full-wave rectifier REC1. The power converting circuit 23 includes at least one switching element Q1 and converts electric power from an output of the full-wave rectifier REC1 to the light-emitting diodes 20 according to the switching action of the switching element Q1. The power supply device 25 charges the capacitor C1 via the second diode D2 according to the switching action of the switching element Q1 of the power converting circuit 23. As a result, it is possible to suppress a rush current and obtain a high power factor with a simple configuration.

Therefore, it is possible to provide the power supply device 25, the lighting circuit 12, and the luminaire 10 small in size and low in price.

In particular, since the capacitor C1 is not directly charged by the power supply voltage, a capacitor having a low withstanding voltage and small in size can be used. The power supply device 25, the lighting circuit 12, and the luminaire 10 can be further reduced in size.

Since the power supply device 25 can expand a current conduction angle, the power supply device 25 has high affinity with the dimmer 26. The trough of the voltage V2 is filled by the capacitor C1. Therefore, it is possible to secure the power supply voltage even in a period in which the dimmer 26 is off and easily perform output control.

Further, the power supply device 25 can continuously feed an electric current to the light-emitting diodes 20. Therefore, it is possible to cause the light-emitting diodes 20 to stably emit light.

The capacitor C1 is charged using the inductor L1 or the choke coil L2 or L3. Therefore, it is possible to easily control a charging amount of the capacitor C1 simply by changing a turn ratio of the primary side and the secondary side of the inductor L1 or the choke coil L2 or L3.

In the embodiments, the luminaire 10 is not limited to the bulb-type lamp. The luminaire 10 can be an arbitrary luminaire including the light-emitting diodes 20 such as a downlight, a spotlight, or a straight tube type lamp.

The power supply device 25 is not limited to the power supply device used in the luminaire 10 and the lighting circuit 12.

Further, if the power converting circuit 23 is connected to the output side of the full-wave rectifier REC1 in parallel, the other components may be interposed between the power converting circuit 23 and the full-wave rectifier REC1. Similarly, if the partial smoothing circuit 24 and the power converting circuit 23 are provided in parallel, the other components may be interposed or may not be interposed between the partial smoothing circuit 24 and the power converting circuit 23.

The solid-state light-emitting element is not limited to the light-emitting diode. For example, an organic EL element or a semiconductor laser can be used.

While certain embodiments have been described, these embodiments have been presented by way of example only, and are not intended to limit the scope of the inventions. Indeed, the novel systems described herein may be embodied in a variety of other forms; furthermore, various omissions, substitutions and changes in the form of the systems described herein may be made without departing from the spirit of the inventions. The accompanying claims and their equivalents are intended to cover such forms or modifications as would fall within the scope and spirit of the inventions.

## Claims

1. A power supply device (25) comprising:
a rectifier (REC1) configured to rectify an alternating-current voltage;
a power converting circuit (23) including at least one switching element (Q1) and configured to convert an output of the rectifier (REC1) into a direct-current voltage according to a switching action of the switching element (Q1); and
a partial smoothing circuit (24) including, in series, a capacitor (C1) and a diode (D1) connected in polarity opposite to output polarity of the rectifier (REC1), the partial smoothing circuit (24) being provided on an output side of the rectifier (REC1) in parallel to the power converting circuit (23), the capacitor (C1) being charged according to the switching action of the switching element (Q1) of the power converting circuit (23), and the partial smoothing circuit (24) supplying charged electric charges of the capacitor (C1) to the power converting circuit (23) via the diode (D1) in a trough portion of an output voltage of the rectifier (REC1).

2. The device (25) according to claim 1, wherein
the rectifier is a full-wave rectifier (REC1),
the capacitor (C1) and the diode (D1) configure a series circuit (22) connected to an output side of the full-wave rectifier (REC1),
the diode (D1) is connected in a direction in which the capacitor (C1) is discharged and in polarity opposite to polarity of the full-wave rectifier (REC1),
the power converting circuit (23) is connected to the output side of the full-wave rectifier (REC1) in parallel to the series circuit (22) and configured to convert an output of the full-wave rectifier (REC1) into direct-current power supplied to a load (20) according to the switching action of the switching element (Q1), and
the device (25) comprises a second diode (D2) configured to charge the capacitor (C1) according to the switching action of the switching element (Q1) of the power converting circuit (23).

3. The device (25) according to claim 1 or 2, wherein the power converting circuit (23) is a falling-voltage chopper circuit including a series circuit (28) of the switching element (Q1) and a third diode (D3), an inductor (L1), one end of which is connected to a connection point of the switching element (Q1) and the third diode (D3) and the other end of which is connected to a second diode (D2), and an output capacitor (C2) connected to an intermediate tap (C) of the inductor (L1) and connected to a load (20) in parallel.

4. The device (25) according to claim 1 or 2, wherein
the power converting circuit (23) is a rising-voltage chopper circuit including a series circuit (37) of a choke coil (L2) and the switching element (Q1) and a series circuit of a fourth diode (D4) and a smoothing capacitor (C5) connected between both ends of the switching element (Q1), and
a secondary winding wire (L2b) magnetically coupled to the choke coil (L2), one end of the secondary winding wire (L2b) being connected to an input side of the choke coil (L2) and the other end of the secondary winding wire (L2b) being connected to the second diode (D2).

5. The device (25) according to claim 1 or 2, wherein
the power converting circuit (23) is a flyback converter including a choke coil (L3), the switching element (Q1) connected to one end on a primary side of the choke coil (L3) in series, and a fifth diode (D5) and an output capacitor (C7) connected to a secondary side (L3b1) of the choke coil (L3), and
the device (25) comprises a secondary winding wire (L3b2) magnetically coupled to the choke coil (L3), one end of the secondary winding wire (L3b2) being connected to an input side of the choke coil (L3) and the other end of the secondary winding wire (L3b2) being connected to the second diode (D2).

6. A solid-state light-emitting element lighting device (12) comprising:
a solid-state light-emitting element (20) functioning as a load; and
the power supply device (25) according to any one of claims 1 to 5 configured to supply electric power to the solid-state light-emitting element (20) to turn on the solid-state light-emitting element (20).

7. A luminaire (10) comprising:
a luminaire main body (13); and
the solid-state light-emitting element lighting device (12) according to claim 6 arranged in the luminaire main body (13).
